**Europäisches Patentamt**

**European Patent Office**

**Office européen des brevets**

(19)

(11) Publication number: **0 195 393**
**B1**

# EUROPEAN PATENT SPECIFICATION

(12)

(45) Date of publication of the patent specification:
**24.10.90**

(51) Int. Cl.⁵: **F16H 3/72,** F16H 1/40, H02K 7/10

(21) Application number: **86103533.5**

(22) Date of filing: **15.03.86**

(54) **Differential actuator.**

(30) Priority: **19.03.85 JP 55069/85**
     **19.03.85 JP 55070/85**

(43) Date of publication of application:
     **24.09.86 Bulletin 86/39**

(45) Publication of the grant of the patent:
     **24.10.90 Bulletin 90/43**

(84) Designated Contracting States:
     **CH DE FR LI**

(56) References cited:
     **DE-C- 335 176**
     **DE-C- 356 516**
     **FR-A- 986 538**

(73) Proprietor: **Mohri, Naotake, 3837-3, Shimada Kuroishi Tenpaku-cho, Tenpaku-ku Nagoya-shi Aichi(JP)**
     Proprietor: **MITSUBISHI DENKI KABUSHIKI KAISHA, 2-3, Marunouchi 2-chome Chiyoda-ku, Tokyo 100(JP)**

(72) Inventor: **Mohri, Naotake, 3837-3, Shimada Kuroishi Tenpakucho, Tenpaku-ku Nagoya-shi Aichi(JP)**
     Inventor: **Saito, Nagao, c/o MITSUBISHI DENKI K.K. 2-3, Marunouchi 2-chome, Chiyoda-ku Tokyo(JP)**
     Inventor: **Miura, Kuniharu c/o MITSUBISHI DENKI K.K., Nagoya Works 1-14, Yada Minami 5-chome, Higashi-ku Nagoya-shi Aichi(JP)**
     Inventor: **Yanai, Yoshihiko c/o MITSUBISHI DENKI K.K., Nagoya Works 1-14, Yada Minami 5-chome, Higashi-ku Nagoya-shi Aichi(JP)**

(74) Representative: **Eisenführ, Speiser & Strasse, Martinistrasse 24, D-2800 Bremen 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The invention relates to a differential actuator including two electric motors/generators each having a rotational shaft capable of being rotated in a forward or reverse direction at a desired speed; the rotational shaft being aligned with each other and opposed to each other at ends thereof at a predetermined spacing; a differential mechanism connected to said rotational shafts and functioning to rotate an output member at a speed corresponding to a relative rotating speed difference between said rotational shafts; said differential mechanism including first and second bevel gears supported in opposed relation to each other at end portions of said rotational shafts, third and fourth bevel gears each engaged with said first and second bevel gears, and a connecting means which supports said third and fourth bevel gears rotatable about respective axes and which itself is rotatable about the axis of said first and second bevel gears, the connecting means being coupled to the output member. Such a differential actuator is already known from DE-C 356 516.

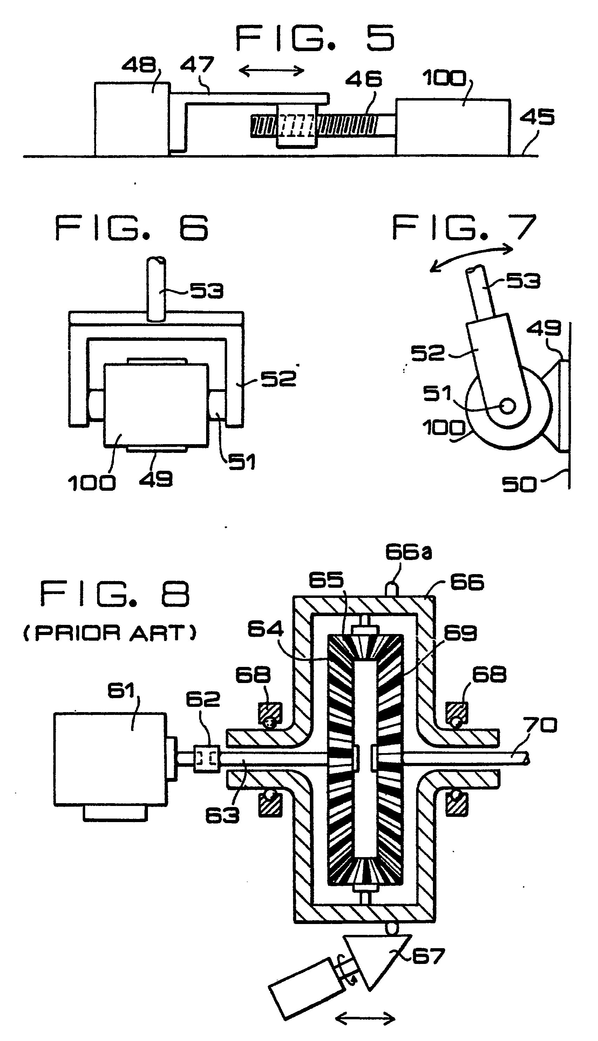

One of the generally known differential actuators is shown in Fig. 8, in which the reference numeral 61 denotes an electric motor; numeral 62 denotes a coupling attached to a shaft end of the motor 61; numeral 63 denotes an input shaft connected to the coupling 62; numeral 64 denotes an input-side gear mounted on a fore end of the input shaft 63; and numeral 65 denotes a differential gear attached to a box 66 through a bearing, the rotation of the box 66 being controlled by a speed governor 67 which is in contact with a contact member 66a. Numeral 68 denotes a bearing which supports the box rotatably, and numeral 69 denotes an output side gear mounted on a fore end of an output shaft 70 and connected to the differential gear 65.

In speed control, for example in the case of a thyristor Leonard drive, a DC motor is used as it is as a single body and the speed is changed by controlling the armature voltage or the field current, or alternatively the input-side gear 64 is rotated by the motor 61 connected to the input shaft 63 through the coupling 62 as shown in the figure to thereby rotate the differential gear 65 connected to the gear 64. At this time, the differential gear 65 not only rotates about its own axis but also rotates together with the box 66 because it is connected to the box. Therefore, the speed of the box 66 can be controlled by changing the peripheral speed of the speed governor 67 and consequently the rotating speed of the output shaft 70 is controlled through the output-side gear 69.

Since with a conventional actuator as a speed change mechanism as described above, the speed control range is practically not larger than 1:3000, problems such as torque ripple at low speeds and backlash have can occur.

The differential actuator according to DE-C 356 516 is related to a drive mechanism for a railway traction vehicle in which the rather large electric motors cannot be placed around the output shaft because the clearance requirements of the vehicle would not permit this. This differential actuator, however, requires a rather large space and cannot be optimally accommodated within one housing.

FR-A 986 538 describes the general principle of a differential gear into which two rotational movements can be combined in order to generate a third combinational movement. The document does not give any indications as to how this differential gear can be combined with two electric drive motors into a compact differential actuator.

It is an object of the present invention to provide a differential actuator of compact construction and small size, in which the various parts of the actuator can be put into a very narrow space.

The differential actuator according to the invention is characterized in that the electric motors/generators and the differential mechanism are coaxially accommodated in a common housing; that said rotational shafts of the motors/generators are hollow shafts; and that said output member is an output shaft extending through the first and second bevel gears, said hollow shafts and said motors/generators to the outside of the housing and being coupled to said connecting means.

Preferable embodiments are defined in the dependent claims.

Fig. 1 is a longitudinal sectional view of a differential actuator according to the present invention;
Fig. 2 is a plan view of the actuator shown in Fig. 1;
Fig. 3 illustrates an electrical connection of the actuator shown in Figs. 1 and 2;
Fig. 4 is a schematic plan view of the actuator of the invention as applied to driving a main shaft of an electrical discharge machine;
Fig. 5 is a schematic side view of the actuator of the invention as applied to a pusher;
Fig. 6 is a front view showing an example of using the actuator of the invention for driving a robot arm;
Fig. 7 is a side view thereof; and
Fig. 8 is a longitudinal sectional view of a conventional differential actuator.

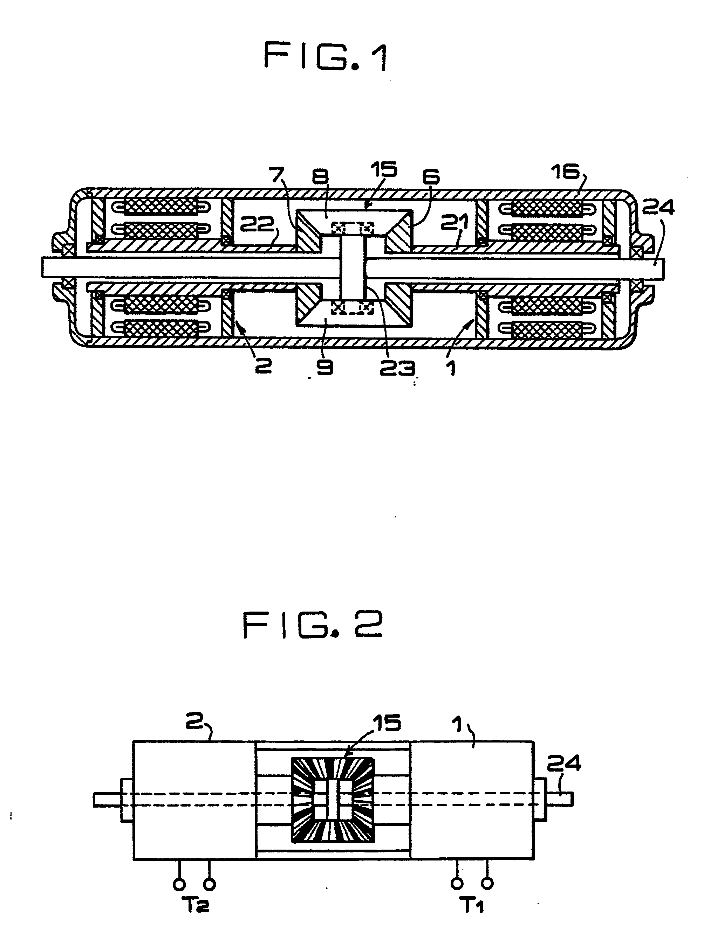

Referring now to Fig. 1, there is illustrated an embodiment of the present invention, in which two unit actuators 1 and 2 have hollow shafts 21 and 22, respectively, and are disposed within a housing 16 so that the hollow shafts 21 and 22 are in alignment with each other. A differential mechanism 15 used herein comprises bevel gears 6, 7, 8 and 9, the bevel gears 8 and 9 being supported by both ends of a differential shaft 23. The differential shaft 23 is fixedly connected to an output shaft 24 which extends through the bores of the hollow shafts 21 and 22 and which are supported by the housing 16.

In the embodiment of Fig. 1, the difference in rotational speed between the bevel gears 6 and 7 brings about rotation of the differential shaft 23 about the axis of the bevel gears 6 and 7 at a speed proportional to the value of such difference, and this rotation is transmitted to the output shaft 24.

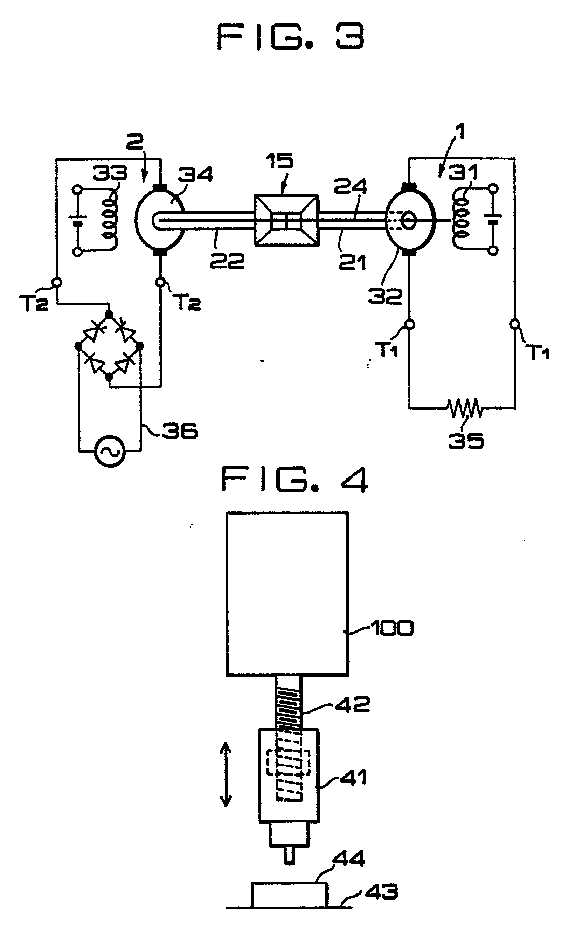

Each of the actuators 1 and 2 may be constituted by an electric motor which also serves as a generator when the rotational shaft is forcibly rotated with an externally power. In Figs. 2 and 3 which illustrate an actuator having electric motors as unit actuators 1 and 2, the first unit actuator 1 is provided with a field circuit 31 and an armature 32, the armature 32 being electrically connected to terminals indicated at T1, and the second actuator 2 is provided with a field circuit 33 and an armature 34, the armature 34 being electrically connected to terminals indicated at T2. As an example, the operation of the actuator will now be explained in the case where a power generation controlling resistor 35 is connected to the terminals T1 and a power supply circuit 36 consisting of an AC source and a rectifier circuit is connected to the terminals T2. Provided, however, that any of the power generation controlling resistor and the power supply circuit may be connected to the terminals T1 and T2. Therefore, the actuator can be operated in one of the following four operation modes:

## Operation Mode of Actuator

| Mode | Terminal | |
| --- | --- | --- |
| | T1 | T2 |
| 1 | power supply | power supply |
| 2 | power supply | power generation |
| 3 | power generation | power supply |
| 4 | power generation | power generation |

The arrangement of Fig. 3 corresponds to mode 3. In mode 3, where the rotational speeds of the first and second unit actuators 1 and 2 are equal to each other, the rotational speed of the output shaft 24 is zero and its output torque is maximum.

The actuator of the present invention can be utilized in an extremely wide range of use. Fig. 4 shows an example in which the actuator 100 of the invention is used for driving a main shaft 41 of an electrical discharge machine. The main shaft 41 is connected to the output shaft of the actuator 100 through a ball screw 42 and it is capable of approaching and going away from a work 44 supported on a head 43. The rise-fall speed ratio of the main shaft during electrical discharge machining is required to be about 10,000, which is satisfied by the actuator of the present invention.

Fig. 5 shows an example in which the actuator 100 of the invention is applied to a pusher in a conventional automatic machine. The actuator 100 is fixed to a base 45 and it acts to push out a work 48 to a desired position through a head 47 which is connected to the output shaft of the actuator through a ball screw 46. Such operations as slowing moving the head 47 forward and rapidly moving it backward can be realized easily.

Further, Figs. 6 and 7 show an articular portion of an industrial robot provided with the actuator 100 of the invention. The actuator 100 is fixed to a suitable base 50 through a bracket 49. An output shaft 51 of the actuator is fixedly connected to a bracket 52, and by its rotation in one direction or an opposite direction about the axis thereof, the bracket 52 and arm 53 attached thereto are swung.

In the application examples shown in Figs. 4, 5, 6 and 7 and all of the possible application examples similar thereto, the actuator of the present invention permits rotation of its output shaft in any desired direction at any desired speed, and its output torque can be adjusted in a wide range.

**Claims**

1. A differential actuator including:
two electric motors/generators (1, 2) each having a rotational shaft (21, 22) capable of being rotated in a forward or reverse direction at a desired speed;

3

the rotational shafts (21, 22) being aligned with each other and opposed to each other at ends thereof at a predetermined spacing;
a differential mechanism (15) connected to said rotational shafts (21, 22) and functioning to rotate an output member (24) at a speed corresponding to a relative rotating speed difference between said rotational shafts (21, 22);
said differential mechanism (15) including first and second bevel gears (6, 7) supported in opposed relation to each other at end portions of said rotational shafts (21, 22), third and fourth bevel gears (8, 9) each engaged with said first and second bevel gears (6, 7), and a connecting means (23) which supports said third and fourth bevel gears (8, 9) rotatable about respective axes and which itself is rotatable about the axis of said first and second bevel gears (6, 7), the connecting means (23) being coupled to the output member (24);
characterized in that
the electric motors/generators (1, 2) and the differential mechanism (15) are coaxially accommodated in a common housing (16);
that said rotational shafts (21, 22) of the motors/generators (1, 2) are hollow shafts; and
that said output member (24) is an output shaft extending through the first and second bevel gears (6, 7), said hollow shafts (21, 22) and said motors/generators (1, 2) to the outside of the housing (16) and being coupled to said connecting means (23).

2. A differential actuator according to claim 1, wherein a power supply circuit (36) or a power generation controlling resistor (35) is selectively connected to each electric motor/generator (1, 2).

3. A differential actuator according to claim 2, further including a controller (5) for connecting said power supply circuit (36) or said power generation controlling resistor (35) selectively to each said electric motor/generator (1, 2).

**Patentansprüche**

1. Differentialantrieb mit:
zwei elektrischen Motoren/Generatoren (1, 2), von denen jeder eine drehbare Welle (21, 22) aufweist, die vorwärts oder rückwärts mit einer Sollgeschwindigkeit gedreht werden kann und wobei die drehbaren Wellen (21, 22) zueinander ausgerichtet sind und sich in einem vorbestimmten Abstand gegenüberliegen;
einem Differentialgetriebe (15), das mit den drehbaren Wellen (21, 22) verbunden ist und das ein Abtriebsglied (24) in eine Drehung versetzt, dessen Geschwindigkeit der relativen Differenz der Rotationsgeschwindigkeit zwischen den beiden drehbaren Wellen (21, 22) entspricht und das ein erstes und zweites Kegelrad (6, 7) enthält, die einander gegenüber an den Enden der drehbaren Wellen (21, 22) angebracht sind und das ein drittes und viertes Kegelrad (8, 9) enthält, die beide jeweils in das erste und zweite Kegelrad (6, 7) eingreifen, und das ein Verbindungsstück (23) enthält, welches das dritte und das vierte Kegelrad (8, 9) trägt und eine Rotation der Kegelräder um die entsprechenden Achsen zuläßt und welches selbst um die Achse des ersten und zweiten Kegelrades (6, 7) gedreht werden kann und mit dem Abtriebsglied (24) gekoppelt ist;
dadurch gekennzeichnet, daß die elektrischen Motoren/Generatoren (1, 2) und das Differentialgetriebe (15) koaxial in einem gemeinsamen Gehäuse (16) untergebracht sind;
daß die drehbaren Wellen (21, 22) der Motoren/Generatoren (1, 2) als Hohlwellen ausgebildet sind;
daß das Abtriebsglied (24) als Abtriebswelle ausgebildet ist, die durch das erste und zweite Kegelrad (6, 7), die Hohlwellen (21, 22) und die Motoren/Generatoren (1, 2) zur Außenseite des Gehäuses (16) verläuft und mit dem Verbindungsstück (23) gekoppelt ist.

2. Differentialantrieb nach Anspruch 1, dadurch gekennzeichnet, daß eine Energieversorgungsschaltung (36) oder ein Lastwiderstand (35) selektiv mit jedem elektrischen Motor/Generator (1, 2) verbunden werden kann.

3. Differentialantrieb nach Anspruch 2, gekennzeichnet durch eine Steuerung (5) zum selektiven Verbinden der Energieversorgungsschaltung (36) oder des Lastwiderstandes (35) mit dem elektrischen Motor/Generator (1, 2).

**Revendications**

1. Organe d'actionnement différentiel comportant:
deux moteurs/générateurs électriques (1, 2) respectivement pourvus d'un arbre rotatif (21, 22) apte à être animé d'un mouvement de rotation dans une direction avant ou arrière à une vitesse voulue;
les arbres rotatifs (21, 22) étant alignés l'un avec l'autre et opposés mutuellement au niveau d'extrémités respectives suivant un espacement prédéterminé;
un mécanisme différentiel (15) relié auxdits arbres rotatifs (21, 22) et opérant pour faire tourner un organe de sortie (24) à une vitesse qui correspond à une différence de vitesse de rotation relative entre lesdits arbres rotatifs (21, 22);
ledit mécanisme différentiel (15) comportant des premier et second pignons coniques (6, 7) supportés dans une relation opposée l'un par rapport à l'autre au niveau de parties d'extrémité desdits arbres rotatifs (21, 22), des troisième et quatrième pignons coniques (8, 9) respectivement engrenés avec lesdits premier et second pignons coniques (6, 7), et des moyens de liaison (23) supportant lesdits troisième et quatrième pignons coniques (8, 9) d'une manière mobile en rotation autour d'axes respectifs, tout en étant eux-mêmes aptes à tourner autour de l'axe desdits premier et second pignons coniques (6, 7), moyens de liaison (23) qui sont accouplés avec l'organe de sortie (24); caractérisé en ce que:

les moteurs/générateurs électriques (1, 2) et le mécanisme différentiel (15) sont logés coaxialement dans un carter commun (16);

lesdits arbres rotatifs (21, 22) des moteurs/générateurs (1, 2) sont des arbres creux; et

ledit organe de sortie (24) est un arbre de sortie qui s'étend à travers les premier et second pignons coniques (6, 7), lesdits arbres creux (21, 22) et lesdits moteurs/générateurs (1, 2) jusqu'à l'extérieur du carter (16), tout en étant accouplé avec lesdits moyens de liaison (23).

2. Organe d'actionnement différentiel selon la revendication 1, dans lequel un circuit d'alimentation électrique (36) ou une résistance de réglage de production d'électricité (35) est relié(e) sélectivement à chacun des moteurs/générateurs électriques (1, 2).

3. Organe d'actionnement différentiel selon la revendication 2, comportant également un organe de commande (5) destiné à relier sélectivement ledit circuit d'alimentation électrique (36) ou ladite résistance de réglage de production d'électricité (35) à chacun desdits moteurs/générateurs électriques (1, 2).

# FIG. 1

# FIG. 2

# FIG. 3

# FIG. 4

EP 0 195 393 B1

FIG. 5

FIG. 6

FIG. 7

FIG. 8
(PRIOR ART)